# EUROPEAN PATENT SPECIFICATION

(11) **EP 1 324 956 B1**
(45) Date of publication and mention of the grant of the patent: **07.05.2014**
(21) Application number: 00974143.0
(22) Date of filing: 21.09.2000
(51) Int. Cl.: C03B 23/027, C03B 23/03, C03B 23/025

(54) **ARTICULATED FORMING MOLD FOR GLASS SHEETS**
BEWEGLICHE FORM FÜR GLASSCHEIBEN
MOULE DE FORMAGE ARTICULE POUR FEUILLES DE VERRE

(43) Date of publication of application: 09.07.2003
(73) Proprietor: Glasstech, Inc., Perrysburg, OH 43552 (US)
(72) Inventor: CLARK, Scott, L., Oregon, OH 43616 (US); YOOS, Gary, A., Perrysburg, Ohio 43551 (US)
(74) Representative: Higgs, Jonathan
(86) International application number: PCT/US2000/040957
(87) International publication number: WO 2002/024588

(56) References cited:
- DE-B- 1 100 238
- US-A- 2 827 738
- US-A- 3 102 802
- US-A- 3 162 520
- US-A- 3 717 449
- US-A- 4 804 397

## Description

### TECHNICAL FIELD

This invention relates to a glass sheet articulated forming mold for forming glass sheets.

### BACKGROUND ART

Forming of glass sheets has previously been performed on articulated molds having a frame on which an articulated peripheral mold ring is mounted. The mold ring has a fixed portion that is fixed with respect to the frame and at least one movable portion that is movable with respect to the frame and the fixed portion to provide forming of the glass sheet, usually in a pressing relationship with another mold.

DE 1100238 describes apparatus for bending glass panes. The apparatus has adjustable features, but only in one direction, namely "vertical" adjustment. Vertical adjustment can prevent stepped transition but does not ensure smooth curvature transition between fixed and movable mold portions.
US 2827738 also describes a glass bending apparatus with similar features.

### DISCLOSURE OF INVENTION

An object of the present invention is to provide an improved articulated forming mold for forming glass sheets.

In carrying out the above object, a glass sheet articulated forming mold of the invention is defined by claim 1. This includes a frame for mounting in a glass sheet forming system that is operable to heat and form glass sheets. A peripheral mold ring of the forming mold is mounted on the frame and has an upwardly facing contoured shape for receiving a heated glass sheet for forming. The mold ring includes a fixed portion that is fixed with respect to the frame and also includes at least one movable portion that is movable with respect to the frame and the fixed portion from a lower position to an upper position to form the heated glass sheet. A pivotal connection pivotally supports the movable portion of the mold ring for pivotal movement with respect to the fixed portion of the mold ring between the lower and upper positions about a pivotal axis. An adjuster adjusts the pivotal connection to adjust the pivotal movement of the movable portion of the mold ring horizontally and vertically with respect to the fixed portion of the mold ring.

According to one aspect of the articulated forming mold, the adjuster includes an adjustable connection for adjusting the location of the pivotal axis with respect to the fixed portion of the mold ring. More specifically, the pivotal connection includes a hinge having a pair of hinge members respectively mounted on the fixed and movable portions of the mold ring with a hinge pin pivotally connecting the pair of hinge members, and the adjustable connection comprises a shim connection that connects one of the hinge members and the fixed portion of the mold ring.

According to another aspect, the adjuster includes an adjustable connection for adjusting the location of the movable portion of the mold ring with respect to the pivotal axis. More specifically, the pivotal connection as previously stated includes a hinge having a pair of hinge members respectively mounted on the fixed and movable portions of the mold ring with a hinge pin pivotally connecting the pair of hinge members, and the adjustable connection comprises a shim connection that connects one of the hinge members and the movable portion of the mold ring. Furthermore, this adjustable connection is also disclosed as including a threaded connection that connects one of the hinge members and the movable portion of the mold ring. Thus, the adjustable connection includes both a shim connection and a threaded connection that connects the hinge and the movable portion of the mold ring.

In the preferred construction, the adjuster of the articulated mold includes a first adjustable connection for adjusting the location of the pivotal axis with respect to the fixed portion of the mold ring and also includes a second adjustable connection for adjusting the location of the movable portion of the mold ring with respect to the pivotal axis. The first adjustable connection includes a shim connection that connects one of the hinge members of the hinge with the fixed portion of the mold ring, and the second adjustable connection includes a shim connection and a threaded connection that cooperatively connects the other hinge member and the movable portion of the mold ring.

In the disclosed construction of the glass sheet articulated forming mold, the mold ring has an elongated shape and includes a pair of movable end portions that are movable with respect to the frame and the fixed ring portion between lower and upper positions to form the heated glass sheets, with a pair of pivotal connections that respectively pivotally support the pair of movable end portions of the mold ring for pivotal movement between the lower and upper positions about associated pivotal axes, and with each pivotal connection including an adjuster for providing adjustment thereof to adjust the pivotal movement of the associated movable end portion of the mold ring with respect to the fixed portion of the mold ring.

The disclosed construction of the glass sheet articulated forming mold has the pivotal connection constructed to include a pair of hinges that are axially spaced from each other along the pivotal axis with the mold ring therebetween, and each hinge includes an adjuster for adjusting the pivotal connection to adjust the pivotal movement of the movable portion of the mold ring with respect to the fixed portion of the mold ring. The adjuster of each hinge includes a first adjustable connection for adjusting the location of the pivotal axis with respect to the fixed portion of the mold ring, and the adjuster of each hinge also includes a second adjustable connection for adjusting the location of the movable portion of the mold ring with respect to the pivotal axis.

In the elongated construction of the disclosed glass sheet articulated forming mold, the pair of movable end portions each includes a pivotal connection with the hinge construction defined above and with the adjuster of each hinge of each pivotal connection having a first adjustable connection for adjusting the location of the associated pivotal axis with respect to the fixed portion of the mold ring, and with the adjuster of each hinge including a second adjustable connection for adjusting the location of the movable portion of the mold ring with respect to the associated pivotal axis. The first adjustable connection is disclosed as a shim connection for adjusting the location of the associated pivotal axis with respect to the fixed portion of the mold ring, and the second adjustable connection is disclosed as including a shim connection and a threaded connection that cooperatively adjustably connect the hinge and the movable portion of the mold ring.

The objects, features and advantages of the present invention are readily apparent from the following detailed description of the best mode for carrying out the invention when taken in connection with the accompanying drawings.

### BRIEF DESCRIPTION OF DRAWINGS

FIGURE 1 is a somewhat schematic side elevational view of a glass sheet forming system that includes a glass sheet articulated forming mold constructed in accordance with the present invention.
FIGURE 2 is a top plan view of the articulated forming mold taken along the direction of line 2-2 in Figure 1.
FIGURE 3 is a side elevational view of the articulated forming mold taken in the same direction as Figure 1 but on an enlarged scale and showing movable end portions of a mold ring of the mold in phantom line indicated lower positions and solid line indicated upper positions.
FIGURE 4 is a top plan view illustrating a hinge of one pivotal connection of the mold ring which includes a adjuster for adjusting the pivotal connection of the movable portion of the mold ring to a fixed portion of the mold ring.
FIGURE 5 is a side elevational view of the hinge taken along the direction of line 5-5 in Figure 4 and shows the adjuster as including a first adjustable shim connection for adjusting the location of the pivotal axis with respect to the fixed portion of the mold ring and showing a second adjustable connection including a shim connection and a threaded connection for adjusting the movable portion of the mold ring with respect to the fixed portion of the mold ring.

### BEST MODE FOR CARRYING OUT THE INVENTION

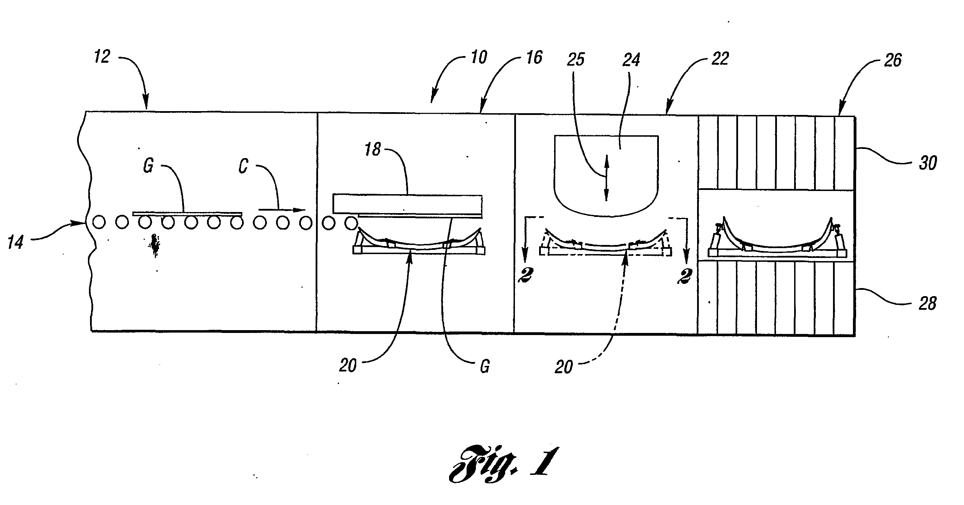

With reference to Figure 1 of the drawings, a schematically illustrated glass sheet forming system 10 includes a furnace 12 in which glass sheets G are heated on a heating conveyor 14 of the roll type. This heating is performed upon conveyance along a direction of conveyance illustrated by arrow C which is toward the right as shown. The forming system 10 also includes a transfer station 16 having a topside transfer platen 18 that receives hot glass sheets G from the heating conveyor 14 and transfers the hot glass sheets to a lower articulated forming mold 20 that is constructed in accordance with this invention as is hereinafter more fully described and that is often referred to as an articulated press ring by those who work in the glass industry. The topside transfer platen 18 is fixedly mounted upon suitable unshown framework and is preferably of the type shown by United States Patent 5,002,599 McMaster et al. so as to receive and support a heated glass sheet from above by vacuum and pressurized air without any direct contact. The hot glass sheets may be located below the topside transfer platen 18 by unshown locators that may be of the type disclosed by United States patents 5,669,953 Schnabel, Jr. et al. and 5,902,366 Schnabel, Jr. et al. A forming station 22 of the system is located as shown in Figure 1 to the right of the transfer station 16 and includes an upper mold 24 that is movable vertically as shown by arrows 25. The forming mold 20 moves a heated glass sheet from the transfer station 16 to the forming station 22 with a heated glass sheet thereon whereupon downward movement of the upper mold 24 provides press forming of the heated glass sheet between the molds as is hereinafter more fully described. A cooling station 26 of system 10 includes lower and upper quench heads 28 and 30 for providing cooling gas that cools the formed glass sheet after movement thereof between the quench heads on the forming mold 20 or otherwise in any suitable manner such as on a separate quench ring. It should be noted that while the elongated direction of the articulated forming mold 20 has been shown extending along the direction of conveyance C for ease of illustration, most elongated molds will have their elongated directions extending transversely to the direction of conveyance in actual production jobs.

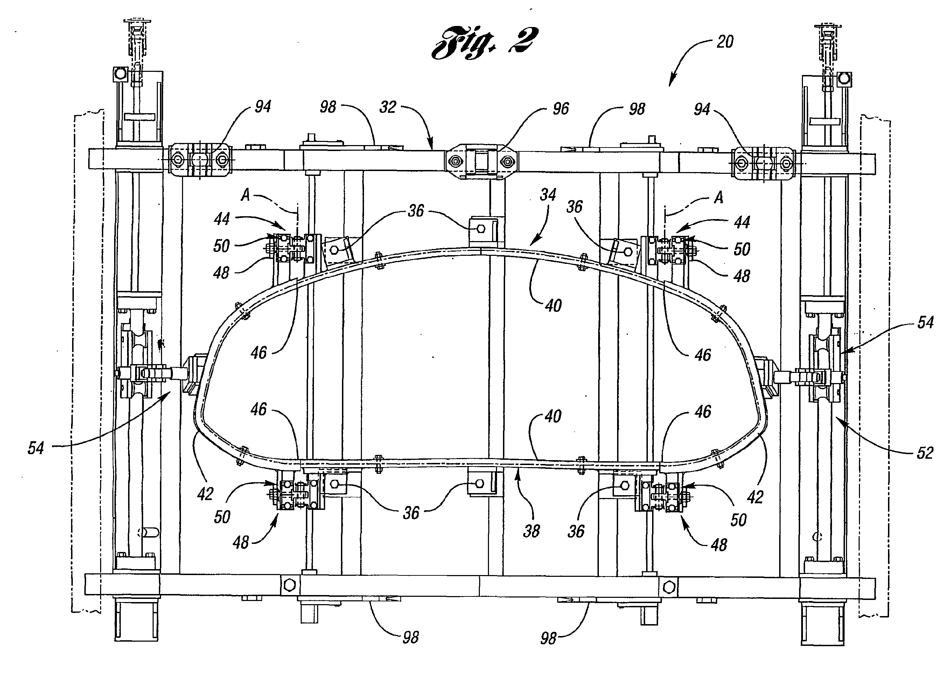

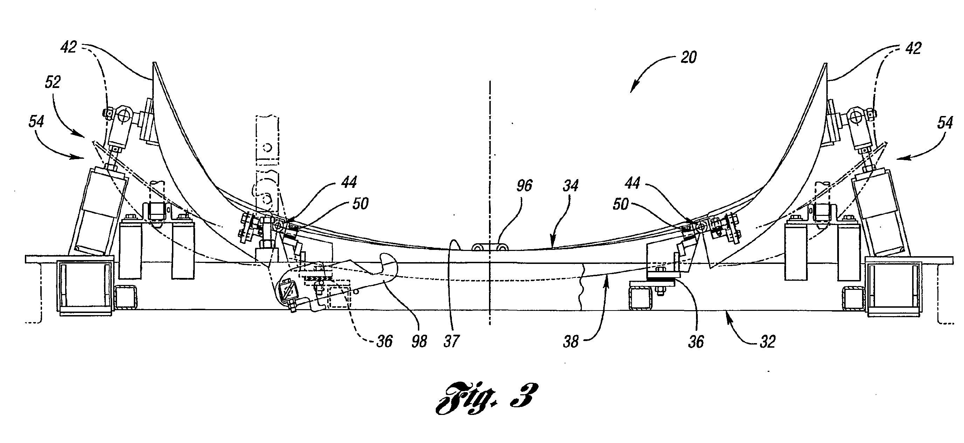

As illustrated in Figures 2 and 3, the articulated forming mold 20 of this invention includes a frame 32 that is mounted in a suitable manner in the glass sheet forming system 10 for horizontal movement between the transfer and forming stations 16 and 22 illustrated in Figure 1. A peripheral mold ring 34 of the articulated forming mold is mounted as shown in Figures 2 and 3 on the frame 32 by mounts 36 that can be adjusted by shims to provide the proper positioning with respect to the frame. The mold ring 34 as shown in Figure 3 has an upwardly facing contoured shape 37 of varying curvature for receiving a heated glass sheet for forming. More specifically, the mold ring 34 includes a fixed portion that is collectively indicated by 38 and is constituted by a pair of fixed sections 40 that are spaced from each other on opposite sides of the mold center. The mold ring 34 also includes at least one movable portion 42 that is movable with respect to the frame 32 and the fixed portion 38 from the phantom line indicated lower position shown in Figure 2 to the solid line indicated upper position to form the heated glass sheet by pressing in cooperation with the upper mold 25 shown in Figure 1 as previously discussed. A pivotal connection 44 supports the movable portion 42 of the mold ring 34 for pivotal movement between the phantom line lower position of Figure 2 and the solid line upper position of about a pivotal axis A that extends through the mold ring at spaced portions 46 of the mold ring. An adjuster 48 of the articulated forming mold is collectively indicated by 48 and is operable to adjust the pivotal connection 44 to adjust the pivotal movement of the movable portion 42 of the mold ring with respect to the fixed portion 38 of the mold ring as is hereinafter more fully described to provide the most effective forming.

As shown best in Figures 2 and 3, the mold ring 34 as illustrated has an elongated shape and includes a pair of movable end portions 42 that are movable with respect to the frame 32 and the fixed portion 38 of the mold ring between the phantom line lower position of Figure 3 and the solid line upper position to form a heated glass sheet. Furthermore, there are a pair of the pivotal connections 44 that respectively pivotally support the movable end portions 42 of the mold ring for pivoting movement between the lower and upper positions about associated pivotal axes A that each extend through the mold ring at spaced portions 46, and an adjuster 48 of each pivotal connection 44 is operable to adjust the pivotal connection to adjust the pivotal movement of the associated movable portion 42 of the mold ring with respect to the fixed portion 38 of the mold ring as is hereinafter more fully described to provide the most effective forming.

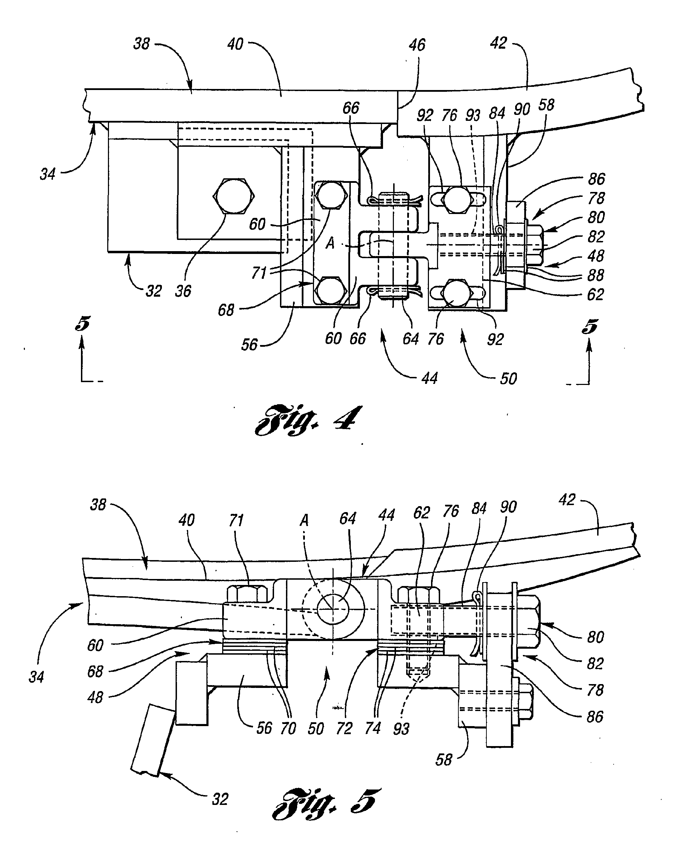

As shown in Figure 4, each pivotal connection 44 includes a pair of hinges 50 that extend between the fixed portion 38 of the mold ring 34 and the associated movable end portion 42 with the mold ring therebetween in order to support the movable end portion for movement between the lower and upper positions previously described about the pivotal axis A.

An actuating mechanism collectively indicated by 52 includes a pair of actuators 54 that respectively extend between the fixed frame 32 of the mold and the pair of movable end portions 42 of the mold ring 34 to provide movement of the end portions between the lower and upper positions respectively shown by phantom and solid line representation in Figure 3. The actuating mechanism 52 positions the movable end portions 42 in their lower positions upon initially receiving a heated glass sheet from the top side transfer platen 18 shown in Figure 1. After movement of the forming mold 20 from the transfer station 16 to the forming station 22, the upper mold 24 is moved downwardly and the actuating mechanism 52 moves the movable end portions 42 upwardly to provide cooperative press forming between the molds. The adjuster 48 of each movable end portion allows positioning thereof to provide the most effective press forming.

With reference to Figures 4 and 5, each hinge 50 is supported on the mold ring 34 by a bracket 56 that is secured to the fixed portion 38 of the mold ring and a bracket 58 that is secured to the movable end portion 42 of the mold ring. More specifically, each hinge 50 includes hinge members 60 and 62 that are respectively mounted on the brackets 56 and 58, and a hinge pin 64 pivotally connects the hinge members 60 and 62 to provide pivoting about the pivotal axis A. Keys 66 secure the hinge pin 64 in position. The mounting of the one hinge member 60 on the bracket 56 mounted by the fixed portion 38 of the mold ring 34 is provided by an adjustable connection that is actually a shim connection 68 including shims 70 and bolts 71 that clamp the shims. This shim connection 68 thus provides adjustment of the location of the pivotal axis A with respect to the fixed portion 38 of the mold ring.

With continuing reference to Figures 4 and 5, the hinge member 62 of each hinge 50 is mounted on the bracket 58 supported by the movable end portion 42 of the mold ring by a second adjustable connection that includes a shim connection 72 including shims 74. A pair of bolts 76 secure hinge member 62 to the bracket 58 with the shims 74 of the shim connection 72 therebetween to provide adjustability of the movable end portion 42 with respect to the pivotal axis A. The adjuster 48 also includes a second adjustable connection that adjusts the movable end portions 42 of the mold ring with respect to the pivotal axis A and the fixed mold ring portion 38. The second adjustable connection also includes a threaded connection 78 that extends between the bracket 58 and the hinge member 62. More specifically, the threaded connection 78 includes a bolt 80 whose head 82 and adjacent portion of its threaded shank 84 are axially fixed with respect to an extension 86 of the bracket 58 by an annular spool 88 that is axially secured by a key 90. The hinge member 62 as shown in Figure 4 has elongated slots 92 and has a threaded hole 93 that receives the threaded shank 84 of bolt 80. Rotation of the bolt 80 thus allows adjustment of the position of the movable end portion 42 toward and away from the pivotal axis A to provide the most effective forming. The elongated slots 92 of the hinge member 62 allows such adjustment and, after completion of the adjustment, the bolts 76 are again tightened to secure the connection for use of the mold.

Also, the mold frame 32 as shown in Figure 2 includes alignment guides 94 and 96 for receiving alignment guides of the upper mold 24 (Figure 1) during the glass sheet forming in accordance with the techniques of United States Patent No. 4,781,745 Mumford.

Hooks 98 (Figures 2 and 3) allow installation of the articulated forming mold 20 with the upper mold 24 in accordance with the teaching of United States Patent 5,906,668 Mumford et al.

## Claims

1. A glass sheet articulated forming mold (20) comprising:
a frame (32) for mounting in a glass sheet forming system (10) that is operable to heat and form glass sheets;
a peripheral mold ring (34) that is mounted on the frame (32) and has an upwardly facing contoured shape (37) for receiving a heated glass sheet (4) for forming;
the mold ring including a fixed portion (38) that is fixed with respect to the frame and also including at least one movable end portion (42) that is movable with respect to the frame (32) and the fixed portion (38) from a lower position to an upper position to form the heated glass sheet;
a pivotal connection (44) that pivotally supports the movable end portion (42) of the mold ring for pivotal movement with respect to the fixed portion of the mold ring between the lower and upper positions about a pivotal axis (A); and
an adjuster (48) for adjusting the pivotal connection (44) to adjust the pivotal movement of the movable end portion (42) of the mold ring horizontally and vertically with respect to the fixed portion (38) of the mold ring.

2. The glass sheet articulated forming mold of claim 1 wherein the adjuster (48) includes an adjustable connection (78) for horizontally adjusting the position of the movable end portion (42) with respect to the fixed portion (38) and the pivotal axis (A).

3. The glass sheet articulated forming mold of claim 2 wherein the pivotal connection (44) includes a hinge (50) having a pair of hinge members (60, 62) respectively mounted on the fixed and movable portions of the mold ring (34), the hinge including a hinge pin (64) that pivotally connects the pair of hinge members, and the adjuster includes a shim connection (68) that connects one of the hinge members (60) and the fixed portion (38) of the mold ring for vertical adjustment.

4. The glass sheet articulated forming mold of claim 2 or 3 wherein the pivotal connection (44) includes a hinge (50) having a pair of hinge members (60, 62) respectively mounted on the fixed and movable portions of the mold ring, the hinge including a hinge pin (64) that pivotally connects the pair of hinge members, and the adjuster includes a shim connection (72) that connects one of the hinge members (62) and the movable portion (42) of the mold ring for vertical adjustment.

5. The glass sheet articulated forming mold of any of claims 2 to 4 wherein the adjustable connection comprises a threaded connection (78) that connects one of the hinge members (62) and the movable portion of the mold ring for horizontal adjustment.

6. The glass sheet articulated forming mold of claim 1 wherein the adjuster (48) includes a first adjustable connection (68) for adjusting the location of the pivotal axis (A) vertically with respect to the fixed portion (38) of the mold ring, and a second adjustable connection (72) for adjusting the location of the movable portion (42) of the mold ring vertically with respect to the pivotal axis (A).

7. The glass sheet articulated forming mold of any preceding claim wherein the mold ring (34) has an elongated shape and includes a pair of movable end portions (42) that are movable with respect to the frame (32) and the fixed ring portion between lower and upper positions to form the heated glass sheet, a pair of pivotal connections (44) that respectively pivotally support the pair of movable end portions of the mold ring for pivotal movement between the lower and upper positions about associated pivotal axes, and each pivotal connection including an adjuster (48) for providing adjustment thereof to adjust the pivotal movement of the associated movable end portion of the mold ring with respect to the fixed portion of the mold ring.

8. The glass sheet articulated forming mold of any preceding claim wherein the pivotal connection includes a pair of hinges (50) that are axially spaced from each other along the pivotal axis (A) with the mold ring (34) therebetween, and each hinge (50) including an adjuster (48) for adjusting the pivotal connection to adjust the pivotal movement of the movable portion (42) of the mold ring with respect to the fixed portion (38) of the mold ring.

## Patentansprüche

1. Angelenkte Form (20) zum Formen von Glasscheiben, die Folgendes umfasst:
einen Rahmen (32) zum Montieren in einem Glasscheibenformsystem (10), der zum Erhitzen und Formen von Glasscheiben dient;
einen peripheren Formring (34), der am Rahmen (32) montiert ist und eine nach oben weisende konturierte Gestalt (37) zum Aufnehmen einer erhitzten Glasscheibe (G) zum Formen hat;
wobei der Formring einen festen Teil (38) aufweist, der mit Bezug auf den Rahmen fest ist, und auch wenigstens einen beweglichen Endteil (42) aufweist, der mit Bezug auf den Rahmen (32) und den festen Teil (38) von einer unteren Position in eine obere Position bewegt werden kann, um die erhitzte Glasscheibe zu bilden;
eine Schwenkverbindung (44), die den beweglichen Endteil (42) des Formrings für eine Schwenkbewegung mit Bezug auf den festen Teil des Formrings zwischen der unteren und der oberen Position um eine Schwenkachse (A) schwenkbar lagert; und
einen Justierer (48) zum Justieren der Schwenkverbindung (44), um die Schwenkverbindung des beweglichen Endteils (42) des Formrings horizontal und vertikal mit Bezug auf den festen Teil (38) des Formrings zu justieren.

2. Angelenkte Form zum Formen von Glasscheiben nach Anspruch 1, wobei der Justierer (48) eine justierbare Verbindung (78) zum horizontalen Justieren der Position des beweglichen Endteils (42) mit Bezug auf den festen Teil (38) und die Schwenkachse (A) aufweist.

3. Angelenkte Form zum Formen von Glasscheiben nach Anspruch 2, wobei die Schwenkverbindung (44) ein Scharnier (50) mit einem Paar Scharnierelementen (60, 62) aufweist, die jeweils am festen und beweglichen Teil des Formrings (34) montiert sind, wobei das Scharnier einen Scharnierstift (64) aufweist, der das Paar Scharnierelemente schwenkbar verbindet, und der Justierer eine Zwischenlagenverbindung (68) aufweist, die eines der Scharnierelemente (60) und den festen Teil (38) des Formrings für eine vertikale Justierung verbindet.

4. Angelenkte Form zum Formen von Glasscheiben nach Anspruch 2 oder 3, wobei die Schwenkverbindung (44) ein Scharnier (50) mit einem Paar Scharnierelementen (60, 62) aufweist, die jeweils am festen und beweglichen Teil des Formrings montiert sind, wobei das Scharnier einen Scharnierstift (64) aufweist, der das Paar Scharnierelemente schwenkbar verbindet, und der Justierer eine Zwischenlagenverbindung (72) aufweist, die eines der Scharnierelemente (62) und den beweglichen Teil (42) des Formrings für eine vertikale Justierung verbindet.

5. Angelenkte Form zum Formen von Glasscheiben nach einem der Ansprüche 2 bis 4, wobei die justierbare Verbindung eine Gewindeverbindung (78) aufweist, die eines der Scharnierelemente (62) und den beweglichen Teil des Formrings für eine horizontale Justierung verbindet.

6. Angelenkte Form zum Formen von Glasscheiben nach Anspruch 1, wobei der Justierer (48) eine erste justierbare Verbindung (68) zum Justieren des Ortes der Schwenkachse (A) vertikal mit Bezug auf den festen Teil (38) des Formrings und eine zweite justierbare Verbindung (62) zum Justieren des Ortes des beweglichen Teils (42) des Formrings vertikal mit Bezug auf die Schwenkachse (A) aufweist.

7. Angelenkte Form zum Formen von Glasscheiben nach einem der vorherigen Ansprüche, wobei der Formring (34) eine längliche Gestalt hat und ein Paar bewegliche Endteile (42), die mit Bezug auf den Rahmen (32) und den festen Ringabschnitt zwischen der unteren und der oberen Position zum Formen der erhitzten Glasscheibe beweglich sind, und ein Paar Schwenkverbindungen (44) aufweist, die jeweils das Paar bewegliche Endteile des Formrings für eine Schwenkbewegung zwischen der unteren und der oberen Position um assoziierte Schwenkachsen schwenkbar lagert, und wobei jede Schwenkverbindung einen Justierer (48) für deren Jusierung aufweist, um die Schwenkbewegung des assoziierten beweglichen Endteils des Formrings mit Bezug auf den festen Teil des Formrings zu justieren.

8. Angelenkte Form zum Formen von Glasscheiben nach einem der vorherigen Ansprüche, wobei die Schwenkverbindung ein Paar Scharniere (50) aufweist, die axial entlang der Schwenkachse (A) mit dem Formring (34) dazwischen voneinander beabstandet sind, und wobei jedes Scharnier (50) einen Justierer (48) zum Justieren der Schwenkverbindung beinhaltet, um die Schwenkbewegung des beweglichen Teils (42) des Formrings mit Bezug auf den festen Teil (38) des Formrings zu justieren.

## Revendications

1. Moule de formage articulé pour feuilles de verre (20), comprenant :
un cadre (32) destiné à être monté dans un système de formage de feuilles de verre (10) qui est exploitable de façon à chauffer et à former des feuilles de verre ;
une bague de moule périphérique (34) qui est montée sur le cadre (32) et possède une forme façonnée dirigée vers le haut (37) pour recevoir une feuille de verre chauffée (G) en vue d'un formage ;
la bague de moule incluant une portion fixe (38) qui est fixe par rapport au cadre et incluant également au moins une portion d'extrémité mobile (42) laquelle est mobile par rapport au cadre (32) et à la portion fixe (38) à partir d'une position inférieure vers une position supérieure afin de former la feuille de verre chauffée ;
un raccord à pivot (44) qui soutient de façon pivotante la portion d'extrémité mobile (42) de la bague de moule en vue d'un mouvement pivotant par rapport à la portion fixe de la bague de moule entre les positions inférieure et supérieure autour d'un axe de pivotement (A) ; et
un dispositif de réglage (48) destiné à régler le raccord à pivot (44) afin de régler le mouvement pivotant de la portion d'extrémité mobile (42) de la bague de moule dans le plan horizontal et le plan vertical par rapport à la portion fixe (38) de la bague de moule.

2. Moule de formage articulé pour feuilles de verre selon la revendication 1, le dispositif de réglage (48) incluant un raccord réglable (78) destiné à régler dans le plan horizontal la position de la portion d'extrémité mobile (42) par rapport à la portion fixe (38) et à l'axe de pivotement (A).

3. Moule de formage articulé pour feuilles de verre selon la revendication 2, le raccord à pivot (44) incluant une charnière (50) laquelle possède une paire d'éléments à charnière (60, 62) respectivement montés sur les portions fixe et mobile de la bague de moule (34), la charnière incluant une broche de charnière (64) laquelle raccorde de façon pivotante la paire d'éléments à charnière, et le dispositif de réglage incluant un raccord à cales (68) qui raccorde l'un des éléments à charnière (60) et la portion fixe (38) de la bague de moule en vue d'un réglage vertical.

4. Moule de formage articulé pour feuilles de verre selon la revendication 2 ou 3, le raccord à pivot (44) incluant une charnière (50) laquelle possède une paire d'éléments à charnière (60, 62) respectivement montés sur les portions fixe et mobile de la bague de moule, la charnière incluant une broche de charnière (64) laquelle raccorde de façon pivotante la paire d'éléments à charnière, et le dispositif de réglage incluant un raccord à cales (72) qui raccorde l'un des éléments à charnière (62) et la portion mobile (42) de la bague de moule en vue d'un réglage vertical.

5. Moule de formage articulé pour feuilles de verre selon l'une quelconque des revendications 2 à 4, le raccord réglable comprenant un raccord fileté (78) qui raccorde l'un des éléments à charnière (62) et la portion mobile de la bague de moule en vue d'un réglage horizontal.

6. Moule de formage articulé pour feuilles de verre selon la revendication 1, le dispositif de réglage (48) incluant un premier raccord réglable (68) destiné à régler la localisation de l'axe de pivotement (A) dans le plan vertical par rapport à la portion fixe (38) de la bague de moule, et un deuxième raccord réglable (72) destiné à régler la localisation de la portion mobile (42) de la bague de moule dans le plan vertical par rapport à l'axe de pivotement (A).

7. Moule de formage articulé pour feuilles de verre selon l'une quelconque des revendications précédentes, la bague de moule (34) présentant une forme allongée et incluant une paire de portions d'extrémité mobiles (42) qui sont mobiles par rapport au cadre (32) et la portion de bague fixe entre des positions inférieure et supérieure afin de former la feuille de verre chauffée, une paire de raccords à pivot (44) qui respectivement soutiennent de façon pivotante la paire de portions d'extrémité mobiles de la bague de moule pour assurer un mouvement pivotant entre les positions inférieure et supérieure autour des axes de pivotement associés, et chaque raccord à pivot incluant un dispositif de réglage (48) destiné à procurer un réglage de celui-ci afin de régler le mouvement pivotant de la portion d'extrémité mobile associée de la bague de moule par rapport à la portion fixe de la bague de moule.

8. Moule de formage articulé pour feuilles de verre selon l'une quelconque des revendications précédentes, le raccord à pivot incluant une paire de charnières (50) lesquelles sont espacées dans le plan axial l'une de l'autre le long de l'axe de pivotement (A), alors que la bague de moule (34) se trouve entre ces postes, et chaque charnière (50) incluant un dispositif de réglage (48) destiné à régler le raccord à pivot afin de régler le mouvement pivotant de la portion mobile (42) de la bague de moule par rapport à la portion fixe (38) de la bague de moule.
